# EUROPÄISCHE PATENTANMELDUNG

(11) **EP 3 758 197 A1**
(43) Veröffentlichungstag der Anmeldung: **30.12.2020**
(21) Anmeldenummer: 20180287.3
(22) Anmeldetag: 16.06.2020
(51) Int. Cl.: H02K 5/20

(54) **STATORGEHÄUSE FÜR EINE ELEKTRISCHE MASCHINE, ELEKTRISCHE MASCHINE UND FAHRZEUG**

(30) Priorität: 24.06.2019 DE 102019116941
(71) Anmelder: Valeo Siemens eAutomotive Germany GmbH, 91056 Erlangen (DE)
(72) Erfinder: KRAIS, Nils, 97618 Strahlungen (DE); SÖNTGERATH, Philipp, 41372 Niederkrüchten (DE)
(74) Vertreter: Dr. Gassner & Partner mbB

(57) **Zusammenfassung**

Statorgehäuse (2) für eine elektrische Maschine (1), umfassend einen durch ein Kühlfluid durchströmbaren Kühlkanal (6) mit mehreren sich in axialer Richtung oder in Umfangsrichtung ersteckenden Hauptabschnitten (7), wobei benachbarte Hauptabschnitte (7) derart durch Umlenkabschnitte (8) des Kühlkanals (6) verbunden sind, dass ein mäanderförmiger Kühlpfad (9) ausgebildet ist, wobei innerhalb der Umlenkabschnitte (8) jeweils ein Führungselement (10) ausgebildet ist, das den Kühlpfad (9) in zwei Teilkühlpfade (11, 12) auftrennt.

## Beschreibung

Die vorliegende Erfindung betrifft ein Statorgehäuse für eine elektrische Maschine, umfassend einen durch ein Kühlfluid durchströmbaren Kühlkanal mit mehreren sich in axialer Richtung oder in Umfangsrichtung ersteckenden Hauptabschnitten, wobei benachbarte Hauptabschnitte derart durch Umlenkabschnitte des Kühlkanals verbunden sind, dass ein mäanderförmiger Kühlpfad ausgebildet ist.

Daneben betrifft die Erfindung eine elektrische Maschine und ein Fahrzeug.

Beim Betrieb elektrischer Maschinen verhalten sich elektrische Verluste typischerweise proportional zum eingeprägten Statorstrom. Wegen elektrischer Wicklungswiderstände der Statorwicklungen wird Wärme erzeugt, die bei hohen Strömen zu einem thermischen Fehler der Statorwicklungen führen kann. Um die Ausnutzung der elektrischen Maschine zu steigern, ist daher eine Entwärmung der Maschine erforderlich.

Bei Maschinen mit hoher Ausnutzung erfolgt dies typischerweise mittels eines Kühlfluids, insbesondere mittels einer Wasserkühlung. Dazu ist es bekannt, in einem Statorgehäuse einen durch das Kühlfluid durchströmbaren Kühlkanal mit einem mäanderförmigen Kühlpfad vorzusehen. Der Kühlkanal besteht dazu aus sich in axialer oder in Umfangsrichtung erstreckende Hauptabschnitten, die paarweise durch Umlenkabschnitte verbunden sind. Dabei steigt ein Druckabfall über dem Kühlpfad typischerweise mit steigender Länge des Kühlpfads bzw. mit der Anzahl der Hauptabschnitte und/oder mit dem Volumenstrom des Kühlfluids.

Der Erfindung liegt mithin die Aufgabe zugrunde, eine Möglichkeit zur Kühlung einer elektrischen Maschine anzugeben, bei der ein Druckabfall über einem mäanderförmigen Kühlpfad reduziert wird.

Diese Aufgabe wird erfindungsgemäß bei einem Statorgehäuse der eingangs genannten Art dadurch gelöst, dass innerhalb der Umlenkabschnitte jeweils ein Führungselement ausgebildet ist, das den Kühlpfad in zwei Teilkühlpfade auftrennt.

Der Erfindung liegt die Erkenntnis zugrunde, dass ein Druckabfall über dem Kühlpfad ganz erheblich durch eine Strömungsablösung im Bereich der Umlenkabschnitte verursacht wird, die sich durch die Aufteilung des Kühlpfads in die Teilkühlpfade signifikant verringern lässt. Dabei ist zu beachten, dass die durch die Auftrennung des Kühlpfads in die Teilkühlpfade bewirkte Verringerung des Druckabfalls wesentlich stärker ausgeprägt ist, als eine geringfügige Erhöhung des Druckabfalls durch die Verringerung des Strömungsquerschnitts wegen der Hinzufügung der Führungselemente.

Das erfindungsgemäße Statorgehäuse ermöglicht folglich eine signifikante Reduktion des Druckabfall über dem mäanderförmigen Kühlpfad und erlaubt so beispielsweise den Einsatz von leistungsschwächeren Pumpen für das Kühlfluid oder aber eine Erhöhung des Volumenstroms des Kühlfluids und/oder eine Erhöhung der Anzahl der Hauptabschnitte bei gleich bleibendem Druckabfall im Vergleich zu einem herkömmlichen Statorgehäuse ohne Führungselemente.

Typischerweise sind die Umlenkabschnitte dazu eingerichtet, eine Umlenkung des Kühlfluids um wenigstens 170°, bevorzugt wenigstens 175°, besonders bevorzugt wenigstens 179°, zu realisieren. Bevorzugt weist der Kühlkanal einen Einlass, der mit einem ersten Hauptabschnitt bezüglich einer Flussrichtung des Kühlfluids verbunden ist, und/oder einen Auslass, der mit einem letzten Hauptabschnitt bezüglich der Flussrichtung des Kühlfluids verbunden ist, auf.

Bevorzugt ist bei dem erfindungsgemäßen Statorgehäuse vorgesehen, dass innerhalb der Umlenkabschnitte jeweils ein zweites Führungselement ausgebildet ist, welches den Kühlpfad in einen weiteren Teilkühlpfad auftrennt.

Es kann ferner vorgesehen sein, dass das zweite Führungselement koaxial und/oder parallel zu dem ersten Führungselement verläuft. Dabei bezieht sich ein koaxialer Verlauf typischerweise auf solche Abschnitte der Führungselemente, die eine kreisbogenartige Form aufweisen, und ein paralleler Verlauf auf solche Abschnitte der Führungselemente, die einen geraden Verlauf aufweisen.

In bevorzugter Ausgestaltung ist vorgesehen, dass das oder ein jeweiliges Führungselement dem Verlauf eines äußeren und/oder eines inneren Rands des Kühlkanals folgt. So wird die Geometrie des Umlenkabschnitts vorteilhafterweise auf die Geometrie des Führungselements übertragen.

Typischerweise ist das oder ein jeweiliges Führungselement zumindest abschnittsweise kreisbogenförmig ausgebildet. Dabei kann das Führungselement vollständig kreisbogenförmig ausgebildet sein. Es ist auch möglich, dass das Führungselement an einem oder an einem jeweiligen Ende des kreisbogenförmigen Abschnitts einen geraden Verlängerungsabschnitt aufweist, welcher sich bevorzugt in einen Hauptabschnitt hineinerstreckt.

Zweckmäßigerweise erstreckt sich das Führungselement zu höchstens 25 Prozent, bevorzugt höchstens 10 Prozent, der Länge der durch den Umlenkabschnitt verbundenen Hauptabschnitte in die durch den Umlenkabschnitt verbundenen Hauptabschnitte hinein. Es kann auch vorgesehen sein, dass erstreckt sich das Führungselement nicht in die durch den Umlenkabschnitt verbundenen Hauptabschnitte hineinerstreckt.

Um eine gleichmäßige Auftrennung des Kühlpfades zu erzielen, ist es zweckmäßig, wenn das Führungselement oder die Führungselemente mittig im Kühlkanal angeordnet ist oder sind.

Es wird bei dem erfindungsgemäßen Statorgehäuse bevorzugt, wenn ein Führungselement eines jeweiligen Unterabschnitts die Teilkühlpfade derart fluiddicht trennt, dass ein Kühlfluidfluss quer zur Flussrichtung des Kühlfluids durch den Kühlkanal unterbunden ist. Dadurch werden partielle Strömungsablösungen in Querrichtung vermieden. Es ist auch möglich, dass alle Führungselemente eines jeweiligen Umlenkabschnitts die Teilkühlpfade fluiddicht trennen.

Gemäß einer besonderen Ausführungsform ist vorgesehen, dass ein Führungselement eines jeweiligen Umlenkabschnitts eine, insbesondere mittige, Durchbrechung aufweist, durch welche zwei der Teilkühlkanäle fluidleitend miteinander verbunden sind. Es ist auch möglich, dass alle Führungselemente eines jeweiligen Umlenkabschnitts eine Durchbrechung aufweisen.

Bei den erfindungsgemäßen Statorgehäuse ist ein jeweiliger Umlenkabschnitt bevorzugt ringsektorförmig ausgebildet.

Gemäß einer alternativen bevorzugten Ausgestaltung ist vorgesehen, dass ein jeweiliger Umlenkabschnitt einen quer zur Erstreckungsrichtung der Hauptabschnitte verlaufenden ersten äußeren Randabschnitt und zweite äußere Randabschnitte, welche den ersten äußeren Randabschnitt mit Rändern der durch den Umlenkabschnitt verbundenen Hauptabschnitte verbinden, aufweist. Der erste äußere Randabschnitt erstreckt sich typischerweise über wenigstens 25 Prozent, bevorzugt 50 Prozent, des Abstands der Ränder der Hauptabschnitte. Die zweiten äußeren Randabschnitte können abgerundet sein und/oder sich entlang der Erstreckungsrichtung der Hauptabschnitte erstrecken.

Das erfindungsgemäße Statorgehäuse lässt sich besonders einfach fertigen, wenn die Hauptabschnitte und die Umlenkabschnitte durch eine Kavität im Statorgehäuse ausgebildet sind. Die Kavität kann beispielsweise in ein Material des Statorgehäuses gefräst sein. Alternativ ist es auch möglich, dass der Kühlkanal zumindest im Bereich des Kühlpfads durch ein Rohr ausgebildet ist.

Bevorzugt umfasst das erfindungsgemäße Statorgehäuse ein inneres Gehäuseelement und ein äußeren Gehäuseelement, wobei das innere Gehäuseelement koaxial innerhalb des äußeren Gehäuseelements angeordnet ist. So kann das Statorgehäuse mit Vorteil modular gefertigt werden.

Bevorzugt ist die Kavität in einem der Gehäuseelemente ausgebildet. Dabei kann vorgesehen sein, dass die Kavität im inneren Gehäuseelement ausgebildet und durch das äußere Gehäuseelement verschlossen ist oder dass die Kavität im äußeren Gehäuseelement ausgebildet und durch das innere Gehäuseelement verschlossen ist.

Außerdem kann vorgesehen sein, dass eines der Gehäuseelemente einen erstes Lagerschild und das andere Gehäuseelement einen zweiten Lageschild des Statorgehäuses umfasst. Bevorzugt ist der Einlass und/oder der Auslass integral mit dem äußeren Gehäuseelement ausgebildet. Dabei können der Einlass und der Auslass an gegenüberliegenden Axialposition des Statorgehäuses vorgesehen sein.

Die der Erfindung zu Grunde liegende Aufgabe wird ferner gelöst durch eine elektrische Maschine für ein Fahrzeug, umfassend ein erfindungsgemäßes Statorgehäuse und einen Stator, der innerhalb des Statorgehäuses angeordnet ist.

Die der Erfindung zu Grunde liegende Aufgabe wird auch gelöst durch ein Fahrzeug, umfassend eine erfindungsgemäße elektrische Maschine, welche dazu eingerichtet ist, das Fahrzeug anzutreiben.

Sämtliche Ausführungen zum erfindungsgemäßen Statorgehäuse lassen sich analog auf die erfindungsgemäße elektrische Maschine und das erfindungsgemäße Fahrzeug übertragen, sodass auch mit diesen die zuvor genannten Vorteile erzielt werden können.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine Prinzipskizze eines ersten Ausführungsbeispiels der erfindungsgemäßen elektrischen Maschine mit einem ersten Ausführungsbeispiel des erfindungsgemäßen Statorgehäuses;
- Fig. 2: eine Explosionsdarstellung des Statorgehäuses;
- Fig. 3: eine Detailansicht eines Umlenkabschnitts des Statorgehäuses;
- Fig. 4: eine Darstellung vom Strömungslinien eines Kühlfluids beim Betrieb der elektrischen Maschine;
- Fig. 5: eine Fig. 4 entsprechende Darstellung beim Betrieb einer herkömmlichen elektrischen Maschine nach dem Stand der Technik;
- Fig. 6: eine Darstellung eines Druckabfalls des Kühlfluids beim Betrieb der elektrischen Maschine;
- Fig. 7: eine Fig. 6 entsprechende Darstellung beim Betrieb der herkömmlichen elektrischen Maschine;
- Fig. 8: eine Darstellung einer Temperaturverteilung beim Betrieb der elektrischen Maschine;
- Fig. 9: eine Fig. 8 entsprechende Darstellung beim Betrieb einer herkömmlichen elektrischen Maschine nach dem Stand der Technik;
- Fig. 10 bis 12: jeweils eine Draufsicht auf ein weiteres Ausführungsbeispiel des erfindungsgemäßen Statorgehäuses; und
- Fig. 13: eine Prinzipskizze eines Ausführungsbeispiels eines erfindungsgemäßen Fahrzeugs.

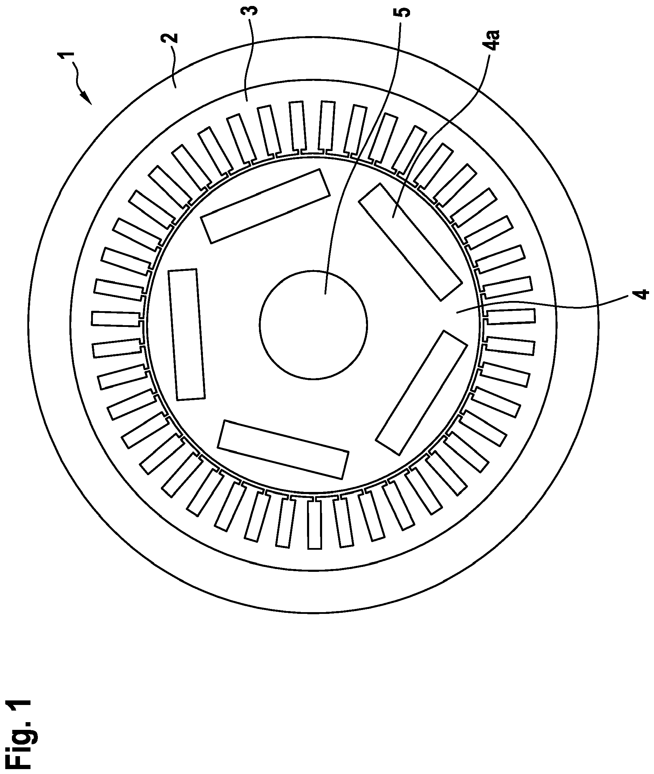

Fig. 1 ist eine Prinzipskizze eines ersten Ausführungsbeispiels einer elektrischen Maschine 1 mit einem ersten Ausführungsbeispiel eines Statorgehäuses 2.

Die elektrische Maschine 1 umfasst ferner einen Stator 3, der mittels eines Presssitzes im Statorgehäuse 2 angeordnet ist. Ein Rotor 4 mit Permanentmagneten 4a ist innerhalb des Stators 3 angeordnet und drehfest mit einer Welle 5 verbunden.

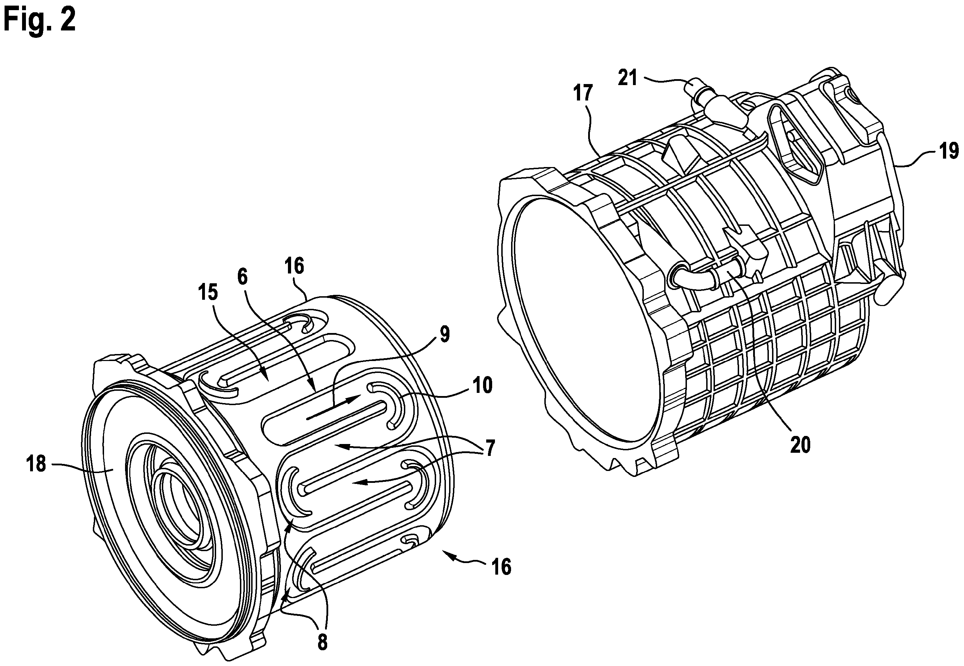

Fig. 2 ist eine Explosionsdarstellung des Statorgehäuses 2.

Das Statorgehäuse 2 umfasst einen durch ein Kühlfluid durchströmbaren Kühlkanal 6 mit mehreren sich in axialer Richtung erstreckenden Hauptabschnitten 7 und mehreren Umlenkabschnitt in 8. Die Umlenkabschnitte 8 verbinden dabei jeweils benachbarte Hauptabschnitte 7 derart, dass ein mäanderförmiger Kühlpfad 9 ausgebildet ist. Die Umlenkabschnitte 8 sind dabei wechselweise an gegenüberliegenden Axialpositionen des Statorgehäuses 2 angeordnet.

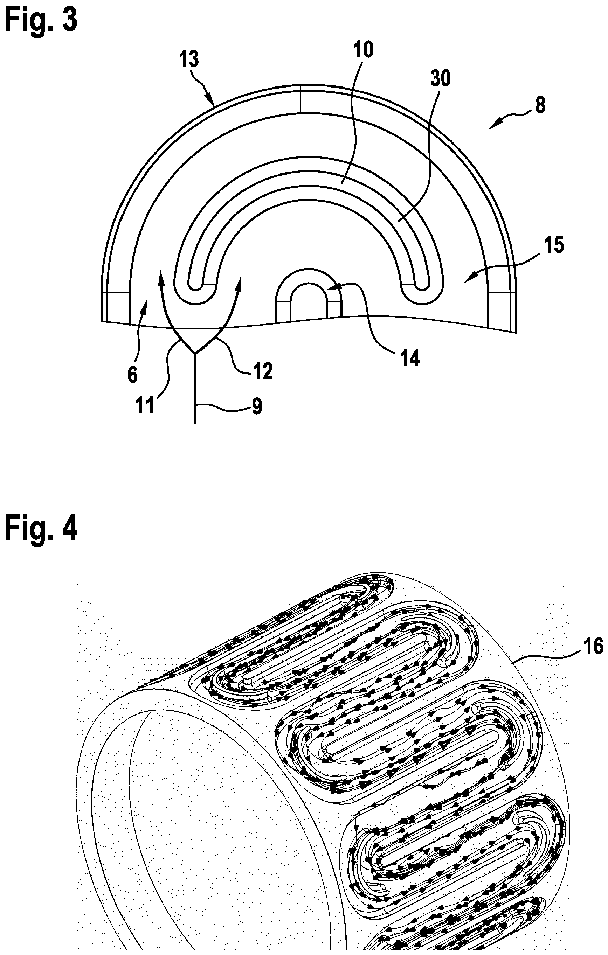

Fig. 3 ist eine Detailansicht eines Umlenkabschnitts 8 des Statorgehäuses 2.

Innerhalb des Umlenkabschnitts 8 ist ein Führungselement 10 ausgebildet, das den Kühlpfad 9 in zwei Teilkühlpfade 11, 12 auftrennt. Dabei folgt das Führungselement 10 dem Verlauf eines äußeren Rands 13 und eines inneren Rands 14 des Kühlkanals 6. Der Umlenkabschnitt 8 ist ersichtlich ringsektorförmig und das im Umlenkabschnitt angeordnete Führungselement 10 kreisbogenförmig ausgebildet. Das Führungselement ist mit anderen Worten aus einem kreisbogenförmigen Abschnitt 30 gebildet. Das Führungselement 10 ist mittig im Kühlkanal 6 angeordnet. Im vorliegenden Ausführungsbeispiel erstreckt sich das Führungselement 10 nicht in die benachbarten Hauptabschnitte 7 hinein. Es ist jedoch alternativ auch möglich, dass sich das Führungselement teilweise in den Hauptabschnitt 7 hinein erstreckt, beispielsweise zu 10 % der Länge des Hauptabschnitts 7. Ersichtlich ist der Umlenkabschnitt 8 durch eine Kavität 15 im Statorgehäuse ausgebildet. Wieder mit Bezug zu Fig. 2 ist ersichtlich, dass auch die Hauptabschnitte 7 durch die Kavität 15 ausgebildet sind.

Fig. 2 zeigt ferner ein inneres Gehäuseelement 16 und ein äußeres Gehäuseelement 17 des Statorgehäuses 2. In einem montierten Zustand des Statorgehäuses 2 ist das innere Gehäuseelement 16 koaxial innerhalb des äußeren Gehäuseelements 17 angeordnet. Die Kavität 15 ist im inneren Gehäuseelement 16 ausgebildet und durch das äußere Gehäuseelement 17 verschlossen. Gemäß einem alternativen Ausführungsbeispiel ist die Kavität 15 im äußeren Gehäuseelement 17 ausgebildet und durch das innere Gehäuseelement 16 verschlossen. Dabei ist das Führungselement 10 so ausgebildet, dass es die Teilkühlpfade 11, 12 derart fluiddicht trennt, dass ein Kühlfluidfluss quer zur Flussrichtung des Kühlfluids durch den Kühlkanal 6 unterbunden ist. Das heißt im vorliegenden Ausführungsbeispiel, dass sich die Führungselemente radial soweit erstrecken, dass sie das äußere Gehäuseelement 17 erreichen.

Das innere Gehäuseelement 16 weist ferner einen ersten Lagerschild 18 an einer Stirnseite des Statorgehäuses 2 auf, durch das die Welle 5 (siehe Fig. 1) durchführbar ist. Das äußere Statorgehäuse 17 weist an der anderen Stirnseite einen zweiten Lagerschild 19 auf, welcher ein weiteres Lager für die Welle 5 (siehe Fig. 1) trägt.

Daneben weist das äußere Gehäuseelement 17 einen Einlass 20, der fluidleitend mit einem ersten Hauptabschnitte 7 verbunden ist, und einen Auslass 21, der fluidleitend mit einem letzten Hauptabschnitte 7 verbunden ist, auf. Die Begriffe "erster Hauptabschnitt" und "letzter Hauptabschnitt" beziehen sich dabei auf die Flussrichtung des Kühlfluids.

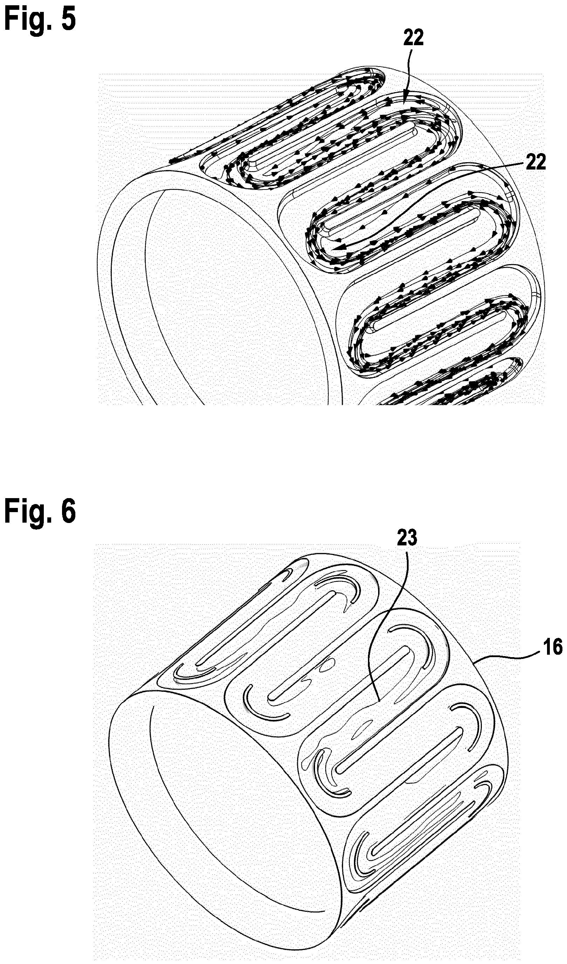

Fig. 4, Fig. 6 und Fig. 8 sind Darstellungen unterschiedlicher Betriebseigenschaften der elektrischen Maschine 1 bei einer exemplarischen Konfiguration mit einer Einlasstemperatur des Kühlfluids von 70 °C und einem Volumenstrom des Kühlfluids von 6 l·min⁻¹. Fig. 5, Fig. 7 und Fig. 9 zeigen die entsprechenden Betriebseigenschaften beim Betrieb einer herkömmlichen elektrischen Maschine nach dem Stand der Technik ohne Fühlungselemente 10.

Fig. 4 ist eine Darstellung von Strömungslinien des Kühlfluids beim Betrieb der elektrischen Maschine 1. Fig. 5 ist eine entsprechende Darstellung beim Betrieb der herkömmlichen elektrischen Maschine. Ersichtlich werden durch die Aufteilung des Kühlpfads 9 in die Teilkühlpfade 11, 12 Strömungsablösungen, die zu Verwirbelungen 22 führen, erheblich reduziert.

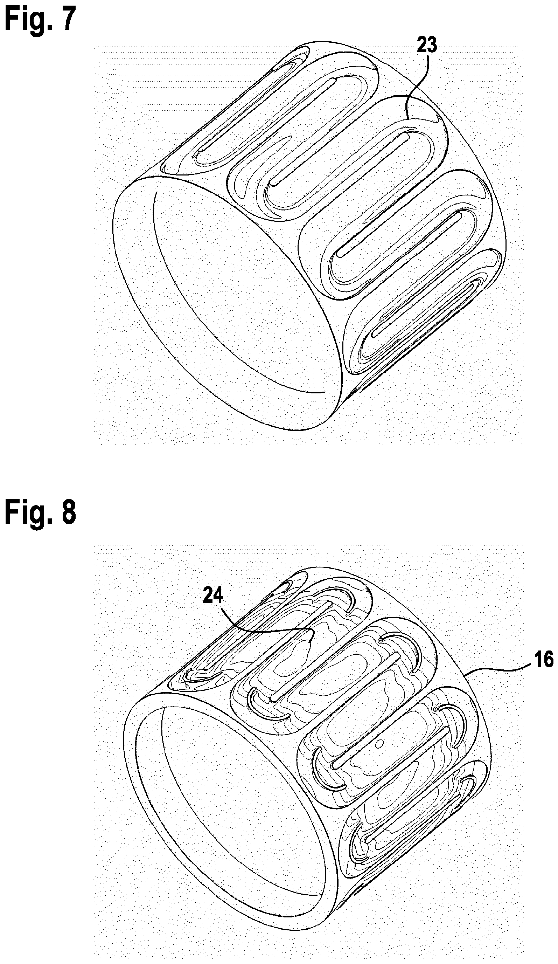

Fig. 6 eine Darstellung eines Druckabfalls des Kühlfluids beim Betrieb der elektrischen Maschine 1. Fig. 7 ist eine entsprechende Darstellung beim Betrieb der herkömmlichen elektrischen Maschine. In beiden Figuren sind Isolinien 23 des Drucks eingezeichnet. Ersichtlich verlaufen die Isolinien 23 bei der elektrischen Maschine 1 gemäß Fig. 6 mit wesentlich größeren Abständen als bei der herkömmlichen elektrischen Maschine gemäß Fig. 7, was den geringen Druckabfall beim Ausführungsbeispiel aufzeigt.

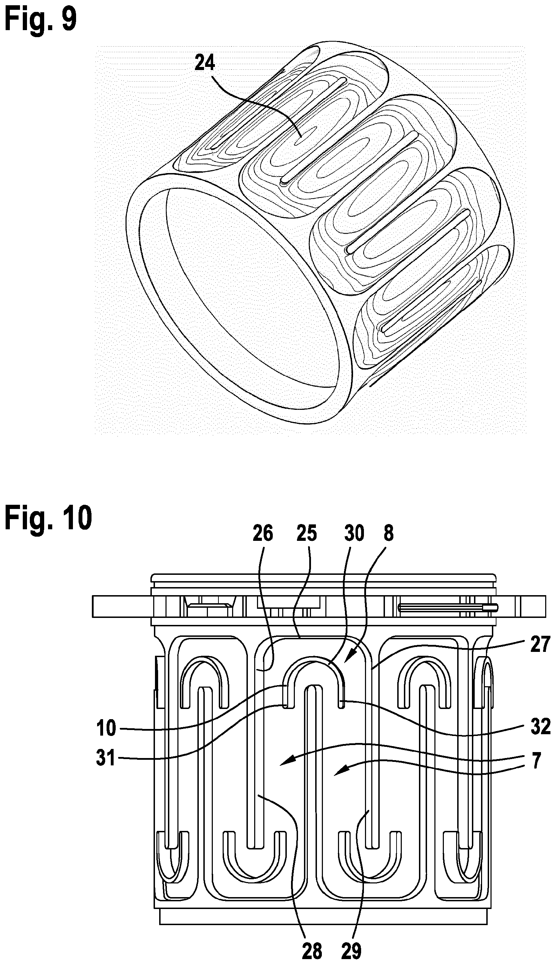

Fig. 8 ist eine Darstellung einer Temperaturverteilung am inneren Gehäuseelement 16 beim Betrieb der elektrischen Maschine 1. Fig. 9 ist eine entsprechende Darstellung beim Betrieb der herkömmlichen elektrischen Maschine. Dabei zeigen Isolinien 24 der Temperatur die entsprechenden Temperaturverteilung an. Ersichtlich kommt es durch die Hinzufügung der Führungselemente 11 bei der elektrischen Maschine 1 nur zu einer unwesentlichen Erhöhung der Temperatur am inneren Gehäuseelement 16.

Bei der genannten exemplarischen Konfiguration wird der Druckabfall über dem Kühlpfad von 16,2 kPa bei der herkömmlichen elektrischen Maschine auf 5,2 kPa bei der elektrischen Maschine 1 reduziert. Dies ergibt eine Verringerung des Druckabfalls um 67,7 %. Die folgende Tabelle zeigt für das innere Gehäuseelement 16, das äußere Gehäuseelement 17 und den Presssitz jeweils eine Temperatur am Ort der höchsten Erwärmung ϑₘₐₓ und eine Durchschnittstemperatur ϑ_{avg} bei der herkömmlichen elektrischen Maschine bzw. der elektrischen Maschine 1:

| | | Herkömmliche elektrische Maschine | Ausführungsbeispiel mit Führungselementen |
|---|---|---|---|
| Inneres Gehäuseelement | ϑₘₐₓ | 87,04 °C | 87,17 °C |
| | ϑ_{avg} | 79,76 °C | 79,78 °C |
| Äußeres Gehäuseelement | ϑₘₐₓ | 81,56 °C | 81,73 °C |
| | ϑ_{avg} | 76,41 °C | 76,54 °C |
| Presssitz | ϑₘₐₓ | 87,04 °C | 87,17 °C |
| | ϑ_{avg} | 82,99 °C | 83,22 °C |

Ersichtlich führt die Hinzufügung der Führungselemente 11 nur zu einer marginalen Temperatursteigerung beim Betrieb der elektrischen Maschine 1.

Im Folgenden werden weitere Ausführungsbeispiele eines Statorgehäuses 2 beschrieben, wobei gleich oder gleichwirkende Komponenten mit identischen Bezugszeichen versehenen sind.

Fig. 10 ist eine Draufsicht auf ein weiteres Ausführungsbeispiel eines Statorgehäuses 2, welches bis auf die nachfolgend beschriebenen Abweichungen dem ersten Ausführungsbeispiel entspricht.

Zunächst weisen die Umlenkabschnitte 8 des Statorgehäuses 2 jeweils einen quer zur Erstreckungsrichtung der Hauptabschnitte 7 verlaufenden ersten äußeren Randabschnitt 25 und zwei zweite äußere Randabschnitte 26, 27 auf, welche den äußeren Randabschnitt 25 mit Rändern 28, 29 der Hauptabschnitte 7 verbinden. Die äußeren Randabschnitte 26, 28 sind auf Seiten des ersten äußeren Randabschnitts 25 abgerundet und erstrecken sich entlang der Erstreckungsrichtung der Hauptabschnitte 7.

Das Führungselement 10 weist neben dem kreisbogenförmigen Abschnitt 30 zwei an ein jeweiliges Ende des kreisbogenförmigen Abschnitts 30 anschließende geraden Verlängerungsabschnitte 31, 32 auf, welche sich in die Hauptabschnitt 7 hineinerstrecken. Die Verlängerungsabschnitte 31, 32 bilden mit anderen Worten tangentiale Fortsetzungen des kreisbogenförmigen Abschnitts 30.

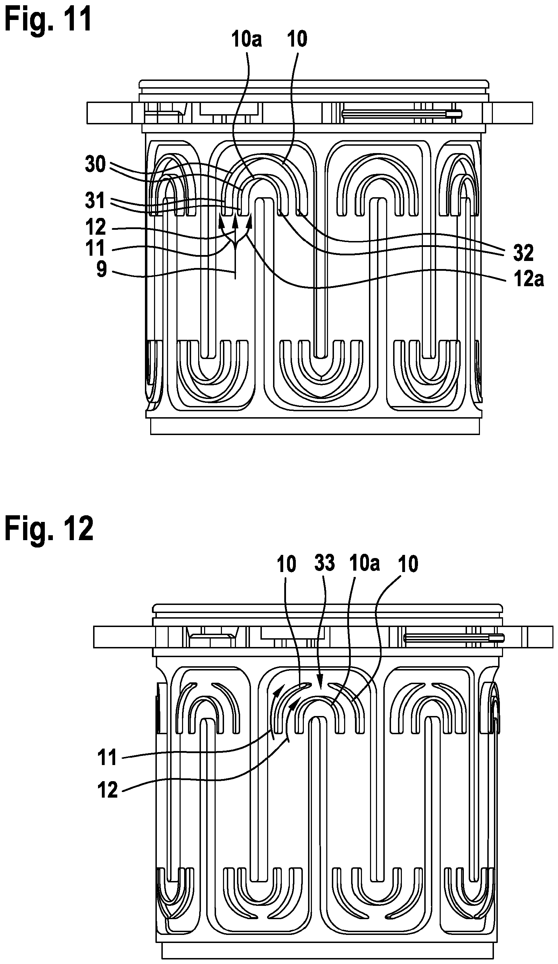

Fig. 11 ist eine Draufsicht auf ein weiteres Ausführungsbeispiel eines Statorgehäuses 2, welches bis auf die nachfolgend beschriebenen Abweichungen dem Ausführungsbeispiel gemäß Fig. 10 entspricht. Bei diesem Ausführungsbeispiel ist zusätzlich ein zweites Führungselement 10a vorgesehen, welches den Kühlpfad 9 in einen weiteren Kühlpfad 12a auftrennt. Mithin trennen die Führungselemente 10, 10a den Kühlpfad 9 in insgesamt drei Kühlpfade 11, 12, 12a auf. Dabei sind die kreisbogenförmigen Abschnitte 30 eines jeweiligen Führungselements 10, 10a koaxial zueinander und die Verlängerungsabschnitte 31, 32 eines jeweiligen Führungselements 10, 10a parallel zueinander angeordnet.

Fig. 12 ist eine Draufsicht auf ein weiteres Ausführungsbeispiel eines Statorgehäuses 2, welches bis auf die nachfolgend beschriebenen Abweichungen dem Ausführungsbeispiel gemäß Fig. 11 entspricht. Bei diesem Ausführungsbeispiel weist das erste Führungselement 10 eine mittige Durchbrechung 33 auf, welche die Teilkühlkanäle 11, 12 fluidleitend miteinander verbindet.

Im Folgenden werden Simulationsergebnisse für weitere Ausführungsbeispiel der elektrischen Maschine 1 beschrieben, die jeweils ein Statorgehäuse 2 gemäß den Fig. 10, 11 und 12 aufweisen. Die exemplarische Konfiguration, auf welcher die Simulationsergebnisse beruhen, unterscheidet sich dabei von jener, auf welche die zuvor gezeigte Tabelle beruht. Ferner werden Simulationsergebnisse einer herkömmlichen elektrischen Maschine beschrieben, deren Statorgehäuse einem der Ausführungsbeispiele gemäß den Fig. 10, 11 oder 12 entspricht, jedoch keine Führungselemente 10, 10a aufweist. Die Darstellung der Simulationsergebnisse bezieht sich auf folgende Arbeitspunkte:

| | Arbeitspunkt 1 | Arbeitspunkt 2 | Arbeitspunkt 3 |
|---|---|---|---|
| Leistung an einem A-seitigen Lager in W | 107 | 70 | 67 |
| Leistung an einem B-seitigen Lager in W | 63 | 38 | 36 |
| Motorverluste in W | 2221 | 2221 | 2442 |
| Volumenstrom in l·min⁻¹ | 10 | 10 | 6 |
| Kühlfluidtemperatur in °C | 25 | 65 | 70 |

Die Simulationsergebnisse für die Temperaturen ϑₘₐₓ und ϑ_{avg} und den Druckabfall Δp für den Arbeitspunkt 1 lauten:

| | ϑ_{avg} | ϑₘₐₓ | Δp |
|---|---|---|---|
| Herkömmliche elektrische Maschine | 34,48 | 37,54 | 20,44 |
| Ausführungsbeispiel gem. Fig. 10 | 36,04 | 40,00 | 7,83 |
| Ausführungsbeispiel gem. Fig. 11 | 35,21 | 39,58 | 10,59 |
| Ausführungsbeispiel gem. Fig. 12 | 35,29 | 39,27 | 9,88 |

Die Simulationsergebnisse für die Temperaturen ϑₘₐₓ und ϑ_{avg} und den Druckabfall Δp für den Arbeitspunkt 2 lauten:

| | ϑ_{avg} | ϑₘₐₓ | Δp |
|---|---|---|---|
| Herkömmliche elektrische Maschine | 73,32 | 76,06 | 15,05 |
| Ausführungsbeispiel gem. Fig. 10 | 74,26 | 77,69 | 5,75 |
| Ausführungsbeispiel gem. Fig. 11 | 73,78 | 77,37 | 7,39 |
| Ausführungsbeispiel gem. Fig. 12 | 73,92 | 77,40 | 7,00 |

Die Simulationsergebnisse für die Temperaturen ϑₘₐₓ und ϑ_{avg} und den Druckabfall Δp für den Arbeitspunkt 3 lauten:

| | ϑ_{avg} | ϑₘₐₓ | Δp |
|---|---|---|---|
| Herkömmliche elektrische Maschine | 81,67 | 85,65 | 6,34 |
| Ausführungsbeispiel gem. Fig. 10 | 83,40 | 88,38 | 2,33 |
| Ausführungsbeispiel gem. Fig. 11 | 82,55 | 87,90 | 3,06 |
| Ausführungsbeispiel gem. Fig. 12 | 82,85 | 87,95 | 2,87 |

Gemäß einem weiteren Ausführungsbeispiel des Statorgehäuses 2 kommt das Führungselement 10 gemäß Fig. 10 bzw. kommen die Führungselemente 10, 10a gemäß Fig. 11 oder Fig. 12 in einem ringsektorförmigen Umlenkabschnitt 8 gemäß dem ersten Ausführungsbeispiel zum Einsatz.

Gemäß einem weiteren Ausführungsbeispiel der elektrischen Maschine 1 erstrecken sich die Hauptabschnitte 7 in Umfangsrichtung und die Umlenkabschnitte 8 in Axialrichtung. Auf ein solches Design des Statorgehäuses 2 lassen sich die vorgenannten Ausführungen entsprechend übertragen.

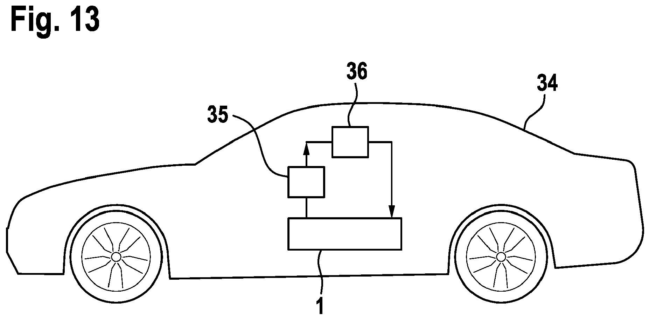

Fig. 13 ist eine Prinzipskizze eines Ausführungsbeispiels eines Fahrzeugs 34.

Das Fahrzeug 34 umfasst eine elektrische Maschine 1 gemäß einem der zuvor beschriebenen Ausführungsbeispiele, welche dazu eingerichtet ist, das Fahrzeug 34 anzutreiben. Daneben umfasst das Fahrzeug 34 einen Wärmetauscher 35 und eine Pumpe 36, die einen geschlossenen Kühlkreislauf mit dem Kühlkanal 6 (siehe Fig. 1) der elektrischen Maschine 1 bilden.

## Patentansprüche

1. Statorgehäuse (2) für eine elektrische Maschine (1), umfassend einen durch ein Kühlfluid durchströmbaren Kühlkanal (6) mit mehreren sich in axialer Richtung oder in Umfangsrichtung ersteckenden Hauptabschnitten (7), wobei benachbarte Hauptabschnitte (7) derart durch Umlenkabschnitte (8) des Kühlkanals (6) verbunden sind, dass ein mäanderförmiger Kühlpfad (9) ausgebildet ist,
**dadurch gekennzeichnet, dass**
innerhalb der Umlenkabschnitte (8) jeweils ein Führungselement (10) ausgebildet ist, das den Kühlpfad (9) in zwei Teilkühlpfade (11, 12) auftrennt.

2. Statorgehäuse nach Anspruch 1, wobei
innerhalb der Umlenkabschnitte (8) jeweils ein zweites Führungselement (10a) ausgebildet ist, welches den Kühlpfad (9) in einen weiteren Teilkühlpfad (12a) auftrennt.

3. Statorgehäuse nach Anspruch 2, wobei
das zweite Führungselement (10a) koaxial und/oder parallel zu dem ersten Führungselement verläuft.

4. Statorgehäuse nach einem der vorhergehenden Ansprüche, wobei
das oder ein jeweiliges Führungselement (10, 10a) dem Verlauf eines äußeren Rands (13) und/oder eines inneren Rands (14) des Kühlkanals (6) folgt.

5. Statorgehäuse nach einem der vorhergehenden Ansprüche, wobei
das oder ein jeweiliges Führungselement (10, 10a) zumindest abschnittsweise kreisbogenförmig ausgebildet ist.

6. Statorgehäuse nach einem der vorhergehenden Ansprüche, wobei
das Führungselement (10) oder die Führungselemente (10, 10a) mittig im Kühlkanal (6) angeordnet ist oder sind.

7. Statorgehäuse nach einem der vorhergehenden Ansprüche, wobei
ein Führungselement (10, 10a) eines jeweiligen Umlenkabschnitts (8) die Teilkühlpfade (11, 12) derart fluiddicht trennt, dass ein Kühlfluidfluss quer zur Flussrichtung des Kühlfluids durch den Kühlkanal (6) unterbunden ist.

8. Statorgehäuse nach einem der vorhergehenden Ansprüche, wobei
ein Führungselement (10) eines jeweiligen Umlenkabschnitts eine Durchbrechung (33) aufweist, durch welche zwei der Teilkühlkanäle (12, 12a) fluidleitend miteinander verbunden sind.

9. Statorgehäuse nach einem der vorhergehenden Ansprüche, wobei
sich das oder ein jeweiliges Führungselement (10, 10a) zu höchstens 25 Prozent, bevorzugt höchstens 10 Prozent, der Länge der durch den Umlenkabschnitt (8) verbundenen Hauptabschnitte (7) oder nicht in die durch den Umlenkabschnitt (8) verbundenen Hauptabschnitte (7) hinein erstreckt.

10. Statorgehäuse nach einem der vorhergehenden Ansprüche, wobei ein jeweiliger Umlenkabschnitt (8) ringsektorförmig ausgebildet ist.

11. Statorgehäuse nach einem der Ansprüche 1 bis 9, wobei ein jeweiliger Umlenkabschnitt (8) einen quer zur Erstreckungsrichtung der Hauptabschnitte (7) verlaufenden ersten äußeren Randabschnitt (25) und zweite äußere Randabschnitte (26, 27), welche den ersten äußeren Randabschnitt mit Rändern (28, 29) der durch den Umlenkabschnitt (8) verbundenen Hauptabschnitte (7) verbinden, aufweist.

12. Statorgehäuse nach einem der vorhergehenden Ansprüche, wobei
die Hauptabschnitte (7) und die Umlenkabschnitte (8) durch eine Kavität (15) im Statorgehäuse (2) ausgebildet sind.

13. Statorgehäuse nach Anspruch 12, welches
ein inneres Gehäuseelement (16) und ein äußeres Gehäuseelement (17) umfasst, wobei das innere Gehäuseelement (16) koaxial innerhalb des äußeren Gehäuseelements (17) angeordnet ist, wobei die Kavität (15) in einem der Gehäuseelemente (16, 17) ausgebildet ist.

14. Elektrische Maschine (1) für ein Fahrzeug (25), umfassend ein Statorgehäuse (2) nach einem der vorhergehenden Ansprüche und einen Stator (3), der innerhalb des Statorgehäuses (2) angeordnet ist.

15. Fahrzeug (25), umfassend eine elektrische Maschine (1) nach Anspruch 14, welche dazu eingerichtet ist, das Fahrzeug (25) anzutreiben.
